# EUROPEAN PATENT APPLICATION

(11) **EP 3 809 489 A1**
(43) Date of publication of application: **21.04.2021**
(21) Application number: 19203019.5
(22) Date of filing: 14.10.2019
(51) Int. Cl.: H01M 4/04, H01M 4/131, H01M 4/1391, H01M 4/525, H01M 4/62, H01M 10/0525, H01M 10/54, H01M 4/02, H01M 4/66

(54) **AQUEOUS CATHODE SLURRY PREPARATION FOR MANUFACTURING LITHIUM-ION BATTERY CATHODES**

(71) Applicant: ETH Zurich, 8092 Zurich (CH)
(72) Inventor: WOOD, Vanessa, 8610 Uster (CH); SHUNMUGASUNDARAM, Ramesh, 8051 Zürich (CH)

(57) **Abstract**

Slurry for the coating of a cathode of lithium ion battery, wherein the slurry consists of a solid fraction and of a solvent/dispersant fraction,
wherein the solid fraction consists of:
(a) 90-95% by weight of a lithium metal oxide based particulate electrochemically activatable material;
(b) 2-6% by weight of an acidic polyacrylate or polymethacrylate binder material;
(c) 2-6% by weight of conductive particulate carbon;
(d) 0-2% by weight further additives different from (a)-(c)
wherein the sum of (a)-(d) make up 100% of the solid fraction
and wherein the solvent/dispersant fraction consists of:
(A) 5-25% by weight of an organic alcoholic solvent/dispersant;
(B) 5-30% by weight of water
(C) 0-5% by weight of solvents/dispersants different from (A) and (B)
wherein the percentages of the solvent/dispersant fraction are relative to the 100% solids fraction.

## Description

### TECHNICAL FIELD

The present invention relates to a cathode slurry composition and a method of preparing a cathode slurry using water as a dispersing medium (instead of toxic organic solvents) to manufacture lithium ion battery cathodes as well as to cathodes and batteries produced using such a method/recipe and to recycling procedures which are made available with such cathodes to fully recover the cathode material ecologically.

### PRIOR ART

A lithium ion battery (LIB) comprises two electrodes - an anode and a cathode, between which lithium ions shuttle back and forth during charge and discharge through electrolyte. LIB electrodes are formed as sheets by coating a layer of micron-sized active particles on the surface of current collectors. The present invention deals with LIB cathode manufacturing.

Traditional methods of fabricating LIB **cathodes** involve preparation of a slurry and its subsequent coating onto aluminum current collectors. A cathode slurry is conventionally prepared by mixing a cathode material powder (e.g. lithium nickel-manganese-cobalt oxide), conductive additive(s) such as carbon black powder, polymeric binder(s) such as polyvinylidene fluoride (PVDF) and liquid solvent(s) to dissolve and/or disperse the ingredients. The as-prepared cathode slurry, usually in the form of an ink, is coated onto an aluminum current collector and subsequently dried at appropriate temperatures to get the cathode in its final form, which serves as a functional electrode in lithium-ion cells. Current cathode slurry preparation methods use N-methyl pyrrolidone (NMP), an organic liquid solvent, as the principal dispersant and PVDF as binder. In NMP, PVDF gets dissolved and the conductive additive and the cathode powder get evenly dispersed resulting in a viscous slurry. The main purpose of using the NMP-PVDF combination in the current slurry preparation method is to get a slurry that exhibits good visco-mechanical properties. This method enables large-scale coating of high quality cathodes at high speed in an industrial cathode fabrication set-up.

The traditional LIB cathode coating process involving NMP has several disadvantages: (a) The solvent NMP is highly toxic. Recently, the European commission has taken steps to completely ban NMP in the industrial processes as it poses health hazards to workers mainly through inhalation and dermal exposure. Due to its high level of toxicity, NMP vapor cannot be easily released into the environment in large quantities. This is already a major constrain in the cathode manufacturing facilities and with increased measures being taken to contain air pollution, release of NMP would definitely lead to an increased risk to the air quality at least in the vicinity of the battery manufacturing factories. (b) NMP is flammable and this warrants fire-proof cathode coating installations, which may incur extra cost. (c) Cathode coating processes involving NMP are expensive as the chemical NMP itself is expensive. (d) Since NMP has a high boiling point, drying needs to be done at high temperatures (at least 120°C). For economic reasons, NMP is usually recycled during the drying process. However, the recycling process further needs costly installations. Hence non-toxic, cheap and eco-friendly dispersant liquids such as water is considered necessary in the place of NMP for cathode slurry preparation.

The state-of-the-art LIB anode coating method are based on water, in which water-soluble binders such as Carboxy-methyl cellulose (CMC) and styrene-butadiene rubber (SBR) are used and more importantly anode materials are inactive in water-based slurry.

Conversely, cathode materials are reactive when contacted with water especially with Ni-rich cathode materials, causing detrimental problems such as lithium leaching from the surface of the cathode material particles. When a Ni-rich LIB cathode material such as NMC 811 (NMC 811 is a cathode material composition with 80 at% nickel, 10 at% manganese, and 10 at% cobalt of the total transition metal atoms, LiNi_{0.8}Mn_{0.1}Co_{0.1}O₂) is added to water, the pH of the water increases becoming basic due to interexchange of Li⁺ ions from the NMC 811 particles and the H⁺ ions of the water molecules.

Aqueous cathode slurry preparations are presently not employed in the industry. However, intense efforts are being made to develop aqueous slurry methods for fabricating LIB cathodes. Usually an aqueous slurry is prepared for anodes, the counter-electrode of the cathode. For anode slurries, several binder compositions involving materials like CMC and SBR are used. Since CMC becomes brittle after drying, SBR is added to make the electrode more elastic. A similar method of preparing aqueous slurry for cathodes using CMC and SBR would be desired. However, satisfactory results have not been achieved for cathodes mainly due to the instability of SBR at high voltage conditions.

Usually polymeric compounds are used as binders for aqueous anode slurry preparation. In US-A-2012/0070737, a cross-linked polymeric compound obtained by reacting polyvinyl alcohol (PVA) and an alkali hydroxy modified polyacrylic acid (PAA) is used as a binder for making anode slurries and is demonstrated for anode slurries. However, the compound is not demonstrated and useable for cathode slurries.

In US-A-2010/0304270, an aqueous polyvinylidene fluoride binder composition for LIB cathode slurry preparation is proposed. The polymer composition includes aqueous fluoropolymers, based on PVDF, surfactants and some fugitive adhesion promoters. Apart from PVDF, thickeners, pH adjusting agents and anti-settling agents were also used and this makes the slurry preparation expensive and environmentally critical.

Similarly, in US-A-2016/0013492, a cathode slurry is prepared using PVDF as lamination agent, PAA or CMC, and SBR, optionally further latex to stabilize the PVDF in dispersion. As solvent inter alia acetone is proposed but also NMP, DMAC and other organic solvents. In WO-A-2015/036882, a water-based LIB cathode slurry for lithium transition metal oxide cathodes is proposed. The method involves a preliminary particle coating (not slurry coating on current collector) with a polymer on the primary particles of the cathode materials. The polymer is reported to have fluorine as a main component (50 wt % of fluorine). The method requires additional manufacturing steps (and hence additional manufacturing costs) before slurry preparation and coating onto the aluminum current collectors. The invention does not involve a preliminary polymer coating on the cathode particles and thus does not require any additional manufacturing step.

US-A-2015037030 provides an aqueous binder having high adhesiveness, that in particular does not exhibit oxidative degradation in an electrode environment, and having little environmental load; and an electrode and a battery that use same. Disclosed is a battery electrode binder containing: (A) a constituent unit derived from a monomer having a hydroxyl group; and (B) a constituent unit derived from a polyfunctional (meth)acrylate having no more than 5 functions, wherein the binder is polymerized before use with the conductive particles. An electrode is prepared using this polymerized binder and is used in a battery such as a lithium-ion secondary battery. The LIB cathodes were made from aqueous polymeric binder that contain hydroxyl as well as polyfunctional methacrylate groups. The polymer with this specific functional group allegedly gives good adhesion to the surface of the cathode particles and flexibility. The synthesis of polymer adds complexity and increased cost.

US-A-2013330615 provides a lithium-ion secondary battery, which has a positive electrode formed using a composition formed of an aqueous solvent and which exhibits superior battery performance. The battery comprises a positive electrode and a negative electrode, and the positive electrode has a positive electrode current collector and a positive electrode mixture layer which is formed on the current collector and which includes at least a positive electrode active material and a hinder. A surface of the positive electrode active material is coated by a hydrophobic coating and the binder dissolves or disperses in the aqueous solvent. The cathode particles are coated (not slurry coating on current collector) preliminarily with tungsten oxide or zirconium oxide and subsequently coated with a hydrophobic coating, a fluorine-based water-repellent resin. The binder used is an amphiphilic compound (e.g. polyethylene oxide). Though metal oxide coatings on the cathode particles are a strategy to protect the cathode particle surfaces, it adds an extra manufacturing step. US-A-2013112928 provides an aqueous electrode binder for a secondary battery suitable as a water-soluble binder that is included in a composition forming an electrode for secondary battery, and does not reduce adhesion and flexibility of an emulsion because a water-soluble polymer is included that has dispersibility and a viscosity control function, and that supplementary works when an electrode is formed. An aqueous electrode binder for a secondary battery includes a water-soluble polymer, wherein the water-soluble polymer includes a structural unit (a) derived from an ethylenically unsaturated carboxylic acid ester monomer in an amount of 50 to 95% by mass and a structural unit (b) derived from an ethylenically unsaturated carboxylic salt monomer in an amount of 5 to 50% by mass, based on 100% by mass of the total amount of the structural units included in the water-soluble polymer, and wherein the water-soluble polymer has a weight-average molecular weight of 500,000 or more. The invention as demonstrated on olivine-type cathode materials. However, the cathode slurry invention was not successfully demonstrated for layered materials.

### SUMMARY OF THE INVENTION

The invention disclosed here aims at using water as a dispersing liquid for LIB cathode slurry processing by taking advantage of the disadvantageous lithium leaching property of LIB cathodes. The mixing of Ni-rich cathode particles, water and an acidic polymer at right ratio catalyzes a reaction to form a lithium-containing polymer on the surface of the cathode particles. This in-situ formed lithium-containing polymer (e.g. lithium polyacrylate) is also water-soluble and acts as a binder. Further, a method is shown to allow to recycle the cathode particles after several charge-discharge cycles in a battery. Thus, the present invention shows a pathway to prepare a slurry for Ni-rich cathode materials in water and the associated cathode recycling method.

So disclosed here is an aqueous slurry composition, preparation, coating and recycling method of cathode materials for lithium ion batteries, wherein the cathode comprises lithium transition metal oxide particles containing nickel and the binder is comprised of a water-soluble polymer. The binder essentially consists of a polymer with an acrylate functional group, which chemically converts into a different lithium-containing polymer during slurry mixing. The in-situ prepared polymer acts as a coating on the cathode particles as well as a binder. In addition, the cathode particles can be recycled after used in lithium ion batteries for several charge-discharge cycles.

The invention presented here proposes a recipe for making a LIB cathode slurry that comprises a lithium transition metal oxide powder, using water as a dispersant and a water-soluble polymer that essentially contains acrylic functional groups. The lithium transition metal oxide powder normally consists of ≈10 µm average diameter essentially spherical particles densely packed with smaller particles (0.1-1 µm), called secondary and primary particles, respectively. The lithium transition metal oxide powders used here normally have primary particles of the number average size 1 to 3 microns and the secondary particles of number average size 5 to 25 microns.

In the slurry preparation of Ni-rich cathodes, a water-soluble polymer containing acrylic group is added as a binder. During the slurry mixing procedure, water attacks the surface of the Ni-rich cathode particles and some lithium ions from the surface get leached into the slurry mixture. The leached lithium reacts with the initially added polymer and transforms into a lithium containing polymer.

Both the initially added polymer and in-situ formed polymer essentially contain acrylate functional groups and are water-soluble and act as binders on the aluminum current collectors. The in-situ formed polymer acts as a coating on the surface of the cathode particles as well as a lithium ion conductor.

The cathode particles are lithium transition metal oxides wherein the transition metal may be formed from the 3d or 4d elements. The ratio of the lithium to transition metals in the overall structure may be Li/TM = 1 or > 1.

The cathode slurry made from water as a solvent/dispersant contains organic solvents/dispersants containing alcoholic functional groups. The cathode slurry also contains conductive carbon materials such as Super-P. It is added to increase the electronic conductivity of the cathode coating and between the cathode particles and the aluminum current collector.

The present invention also paves an easy way to recover cathode particles after end of use of lithium-ion batteries. Due to the water-soluble nature of the lithium polyacrylate, dissolution of the cathode in water results in cathode particles. Once the cathode particles are obtained, a calcination step is necessary to re-lithiate appropriate amount of lithium to get cathode particles of composition similar to that of the pristine ones.

The following are the important embodiments of the present invention and are related to LIB cathode slurry preparation:
(i) Use of water as a slurry dispersing medium replacing organic solvents;
(ii) Use of a water-soluble polymer as one of the binders;
(iii) The combination of water and water-soluble binder being applicable to slurry preparation of nickel-rich cathode materials; and
(iv) Comparable or slightly improved electrochemical properties in the lab-scale batteries (full cells made with graphite anodes) constructed from the cathodes derived from the present invention method compared to that of made with traditional industrial methods that essentially use toxic organic solvents as well as recyclability of the cathodes produced using the method.
   (i) Use of water as a dispersing medium for cathode slurry preparation: In the traditional cathode slurry preparation, water is eliminated in the preparation of LIB cathode slurry as it causes unwanted reactions on the surface of the cathode particles. Many cathodes are highly reactive in the presence of water. It is expected that contacting water with cathodes causes undesired reactions such as Li leaching and formation of electrochemically inactive species on the surface of the cathode particles. By contrast, in the present invention, water was used as a dispersing medium with a selected water-soluble polymer and the combination does not cause any additional detrimental effect on the electrochemical properties of the cell when used together. The water-soluble polymer helps protect the cathode surface from any serious damage when contacting with water.
   (ii) Use of a water-soluble polymer: The conventional method of LIB cathode slurry making involves polymeric PVDF as a binder, which is soluble in NMP. Polymeric binders such as PVDF give mechanical support for the cathode material particles by strong adhesion to the current collector. Thus the use of NMP is not just for eliminating water in the cathode processing but also to conveniently dissolve the PVDF. Altogether, the PVDF-NMP combination brings better mechanical (adhesion to the current collector) as well as electrochemical properties. In the present invention, the use of water-soluble polymer without PVDF and NMP brings additional advantages. (i) The use of water-soluble polymer in water provides mechanical support as good as NMP-PVDF. A bent test was performed by bending the cathode sheet at different bending radii (10 mm to 3 mm) to see if it causes particle detachment from the current collector. The cathode sheet made from water-soluble polymer in water shows as good as or even better flexibility than that of NMP-PVDF. Also, it does not show any signs of particle detachment upon undergoing a bent test. (ii) Elimination of toxic and expensive NMP completely. (iii) The use of water-soluble polymer in water for fabricating LIB cathodes brings either as good as or even slightly better electrochemical properties than that of PVDF-NMP.
   (iii) Use of water as a dispersing medium and water-soluble as binder for Ni-rich cathode materials: The present invention employs a water-soluble binder for preparing Ni-rich cathodes (e.g. LiNi_{0.8}Mn_{0.1}Co_{0.1}O₂ or NMC 811) slurries. Ni-rich cathodes are highly reactive with water and cause unwanted reactions such as Li leaching and the resulting degradation products might deposit on the surface of the cathode causing poor cell performance such as faster capacity fade. In the present invention, the presence of the water-soluble polymer with water does not cause any detrimental effect on Ni-rich cathodes and the lithium ion cells made with the aforementioned slurry works well.
      The water-soluble polymer disclosed in the present invention is acidic in nature and the pH of the slurry is significantly altered by its presence. As a result, the related physicochemical properties of the slurry get altered as well. It appears that the presence of water-soluble polymer acts as a protective layer for the cathode surfaces and suppresses the reactivity of the cathodes. In any case, it is the synergetic effect of water along with the water-soluble polymer, which helps alleviating any detrimental damage to the cathode surface. In addition to that, the formation of protective layer by this binder prevents the cathode-electrolyte interaction at high voltage.
   (iv) Comparable or slightly improved electrochemical properties: A comparison between NMC cathodes prepared from NMP-PVDF and water-soluble polymer with water shows that the cells made from water-soluble polymer in water provide improved capacity retention compared to that of the NMP-PVDF derived cells.

Compared to the state of the art, the present invention of preparing a cathode slurry using water as a dispersing/dissolving medium for Ni-rich cathodes and its electrochemical performance is a progressive step in the LIB cathode manufacturing. The present invention simply shows the possibility of replacing toxic organic solvents and PVDF with water and water-soluble polymers respectively but still shows the possibility to exploit the same electrochemical performance. The present invention disclosure clearly dictates green processing steps for the fabrication of LIB cathodes. Eliminating NMP from the LIB cathode coating process does not only provide a clean manufacturing method but also makes the process more economical.

To achieve the DOE target cost, the cost of the LIB pack is expected to go down to - 3 to 4 times from that of the current cost. The present invention brings two-fold cost benefits - (i) replacing expensive chemicals with water and (ii) low-cost drying process

Procurement and handling the chemical NMP increases the manufacturing cost of LIB cells just because handling toxic chemicals requires increased safety procedures. By contrast, aqueous processing of LIB cathodes makes the LIB manufacturing cheaper.

In industrial scale, NMP-based cathode coatings are typically dried at - 150°C at an air flow rate of 8000 ft3/min. By contrast, aqueous electrode processing requires a drying temperature of only around 90°C and an air flow rate of 4000 ft3/min (only half) and this can be attributed to the lower boiling point and higher vapor pressure of water. It should be noted that in the experiments made to demonstrate the present invention, water-based cathode coatings were dried near 90°C. A 52 Ah Li-ion cell uses - 700 g of NMP. It needs 0.079 h of drying time and it corresponds to 31.5 kWh energy consumption or $0.061/Ah drying cost. By contrast, the same 52 Ah Li-ion cell requires only 387 g of water with a drying time of only 0.022 h corresponding to an energy consumption of only 2.6 kWh or a drying cost of $0.0050/Ah. Thus the economic benefits obtainable by replacing NMP with water is clearly a major step in the LIB manufacturing.

More specifically speaking, the present invention relates to a slurry as claimed, so a slurry for the coating of a cathode of lithium ion battery, wherein the slurry consists of a solid fraction and of a solvent/dispersant fraction. When talking about the solvent/dispersant fraction this means the liquid fraction which contributes to dissolving and/or dispersing the solids fraction.

According to the invention, the solid fraction consists of the following components:
(a) 90-95% by weight of a lithium metal oxide based particulate electrochemically activatable material;
(b) 2-6% by weight of a water soluble, acidic polymeric binder, preferably polyacrylate or polymethacrylate binder material;
(c) 2-6% by weight of conductive further particles, in particular particulate carbon;
(d) 0-2% by weight further additives different from (a)-(c)
wherein the sum of (a)-(d) make up 100% of the solid fraction.

Furthermore the solvent and/or dispersant fraction consists of the following components:
(A) 5-25% by weight of an organic alcoholic solvent/dispersant;
(B) 5-30% by weight of water;
(C) 0-5% by weight of solvents/dispersants different from (A) and (B)
wherein the percentages of the solvent/dispersant fraction are relative to the 100% solids fraction.

Typically, the initially added binder essentially containing polyacrylic functional groups transforms either completely or partially into lithium polyacrylate. The initially added binder essentially containing polyacrylic functional group furthermore normally reacts with the surface of the cathode primary particles and the reaction product is essentially containing or consisting of lithium polyacrylate. The lithium source of the lithium polyacrylate formation is normally from the surface of the cathode primary particles.

Preferably, such a slurry is free from N-methyl pyrrolidone and/or free from fluorinated solvents/dispersants. Further preferably it is free from, solvents/dispersants such as tetrahydrofuran (THF), 1,4-dioxane, methyl ethyl ketone (MEK), methyl isobutyl ketone (MIBK), and benzaldehyde or mixtures thereof.

Further preferably the solids fraction is free from binder systems of the type of SBR, CMC, and/or free from fluorinated binder systems such as in particular free from PVDF. In particular the slurry is free from thermoplastic halogenated polymer, in particular free from thermoplastic fluoropolymers, such as at least one of or all of Polytetrafluorethylene (PTFE), Polyvinylidenefluoride (PVDF), Perfluoro alkoxyalkane copolymers (PFA), Tetrafluorethylene-Hexafluorpropylene (FEP), Tetrafluorethylene-Perfluor-Methylvinylether (MFA). Generally speaking, preferably the solids fraction does not contain any further binder different from the one as defined in (b), and the additive fraction (d) is either forming 0% or does not contain any binders.

Generally speaking, preferably the proportion of (C) is 0% and the solvent/dispersant fraction exclusively consists of (A) and (B).

Preferably the organic alcoholic solvent/dispersant of (A) is a (non-polymeric) mono-alcohol, preferably selected from the group of methanol, ethanol, propanol, butanol, or a mixture thereof, most preferably the organic alcoholic solvent/dispersant is exclusively selected as ethanol.

The proportion of (A) is typically in the range of 10-20% by weight and/or the proportion of (B) is typically in the range of 10-25% by weight, wherein in each case the percentages are given relative to the 100% solids fraction.

Further preferably, at least one of the following conditions applies:
the proportion of (d) in the solids fraction is 0%,
the proportion of component (b) in the solids fraction is in the range of 3-5% by weight,
the proportion of (c) in the solids fraction is in the range of 2-5% by weight.

Component (b) is further preferably selected as a polyacrylic acid binder, preferably having a molecular weight in the range of 300,000-600,000 g per mole, preferably in the range of 400,000-500,000 g per mole. The polyacrylic acid can be a pure polyacrylic acid, but it can also be a block-copolymer including polyacrylic acid chain segments. Preferably it is a pure polyacrylic acid which is used in the present context.

Component (b) can be used in the preparation of the slurry as a dry powder or in the form of a suspension or gel in water and/or alcohol. Preferably polyacrylic acid powder is used or polyacrylic acid solution or gels.

Component (a) is preferably a lithium transition metal oxide formed from the 3d or 4d elements, preferably including Ni, preferably of the LiNiₓMn_{y}Co_{1-x-y}O₂ Type, preferably selected as NMC811.

Further preferably the particles of component (A) have a primary number average particles of the size 1 to 3 microns and secondary particles of number average size 10 to 25 microns. Furthermore the present invention relates to a method for making a slurry as described above. According to this method, preferably components (a)-(c), and if present further (d), are mixed to form the solids fraction and subsequently the solvent/dispersant fraction is added under mixing to form the slurry, wherein preferably mixing takes place in a planetary centrifugal mixture.

Furthermore the present invention relates to a method for the preparation of a coated cathode for a lithium ion battery, wherein a slurry as described above, preferably prepared as described above, is applied to a conductive substrate, preferably in the form of a metal foil, most preferably in the form of an aluminium foil. Preferably such a conductive substrate, to form a layered stack of electrodes, has a thickness in the range of 0.5-2 mm. Subsequently the coated structure is dried, either by drying individual layers or by drying a full stack, preferably above room temperature and/or under reduced pressure. The drying temperature can be below 120°C, preferably below 110°C.

The resulting structure is preferably such that there is a dry coating thickness on the corresponding conductive substrate in the range of 10-200 µm, preferably in the range of 50-120 µm.

The present invention also relates to a coated cathode electrode for a lithium ion battery having a coating based on a slurry as described above, preferably prepared as described above. According to this aspect of the invention, this electrode comprises a cathode which on a conductive substrate, preferably in the form of a metal foil, most preferably in the form of an aluminium foil, with a thickness in the range of 0.5-2 mm, has a dry coating thickness in the range of 10-200 µm, preferably in the range of 50-120 µm.

Furthermore the present invention relates to a stack including such cathodes.

In addition to that, the present invention relates to a lithium ion battery comprising at least one cathode as described above, wherein preferably the battery only contains cathodes as described above. Preferably such a battery comprises or consists of stacked layered electrodes.

Last but not least the present invention relates to a method for recycling a lithium ion battery, preferably having at least one coated cathode as described above. According to this recycling method, preferably in a first (optional) step, if the battery still contains residual charges, it is discharged preferably to a voltage as close as the initial open circuit voltage, then the coating layers are peeled off or dissolved or separated from the conductive substrates, these layers are washed, preferably using a solvent such as dimethyl carbonate, to remove residual electrolyte salt, and/or further washed preferably in water to remove water-soluble polymeric binder, then carbon materials are separated, preferably by centrifugation, and then the resulting material is dried and subsequently calcinated at an elevated temperature of preferably in the range of 800-1000°C preferably in the presence of lithium hydroxide, to obtain recycled electrochemically activatable lithium metal oxide-based particulate material. Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows the discharge capacity retention vs. Cycle No. from tested full cells;
- Fig. 2: shows the Coulombic efficiency vs. Cycle No. from tested full cells;
- Fig. 3: shows a schematic of Lithium polyacrylate formation during slurry preparation;
- Fig. 4: shows Fourier Transformed Infra-red spectrogram of the polymers present in the cathode coating made with polyacrylic acid as binder;
- Fig. 5: shows a s schematic of the cathode recycling method;
- Fig. 6: shows SEM pictures of pristine (left) and recycled cathode particles (right); and
- Fig. 7: shows XRD patterns of pristine and recycled NMC 811 cathode particles

### DESCRIPTION OF PREFERRED EMBODIMENTS

### Slurry preparation in general:

The cathode materials of the LiNiₓMn_{y}Co_{1-x-y}O₂ were obtained from the company Targray. The cathode materials were characterized using XRD for it structure, ICP for its elemental composition and tested in lithium-ion half-cell to gets it electrochemical properties. Cathode slurry was prepared by weighing 90 to 95 weight % g of the cathode powder, 2 to 5 weight % of Polyacrylicacid powder (MW ∼ 450,000 g/mol and obtained from Sigma Aldrich) or a corresponding solid weight proportion from 25 wt% aqueous solution of polyacrylic acid (obtained from Alfa Aesar), 2 to 5 weight % of super P (conductive carbon black obtained from Timcal), to give 100% solids, and then relative to these solids 10 to 20 or 10 - 14 weight % of ethanol and 10 to 28 or 25-28 weight % of water.

The cathode powder, polyacrylic acid and the carbon black powder were dry mixed first before adding into the solvents or dispersing liquids. While the water serves as a solvent for the polyacrylic acid, ethanol serves as a dispersant for non-soluble solids. All the ingredients were mixed in a planetary centrifugal mixer for about 20 minutes with a subsequent defoaming step for 10 mins to remove any bubbles. After thorough mixing, a slurry is obtained as a viscous liquid or gel. For the case of polyvinylidene fluoride (PVDF)-N-methyl pyrrolidone (NMP) slurry, PVDF was replaced with PAA and NMP was replaced with water.

### Slurry Formulation # 1 - PVDF and NMP:

The cathode slurry was prepared for a total solid components of 100 wt % - 93 wt % of the cathode powder, 5 wt % of polyvinylidene fluoride (PVDF) (Average MW ∼ 534,000 g/mol obtained from Sigma Aldrich) and 2 wt % of super P conductive carbon black (obtained from Timcal). With reference to the total weight of the solid components, 30 to 50 wt % of N-methyl pyrrolidone (NMP) was used as the sole solvent.

The cathode powder, PVDF powder and the carbon black powder were dry-mixed first before adding into the solvent NMP. All the ingredients were mixed in a planetary centrifugal mixer for about 20 minutes with a subsequent de-foaming step for 10 mins to remove any bubbles. After thorough mixing, the cathode slurry is obtained as a viscous liquid or gel.

The specific slurry formulations are given in Table 1

**Table 1: Slurry Formulations # 1 - PVDF and NMP**

| Solid component | CompEx 1 | CompEx 2 | CompEx 3 |
|---|---|---|---|
| NMC 811 | 0.93 g | 0.93 g | 0.93 g |
| PAA powder | 0.05 g | 0.05 g | 0.05 g |
| Carbon black | 0.02 g | 0.02 g | 0.02 g |

| **Solvents** | | | |
|---|---|---|---|
| NMP | 0.3 g | 0.4 g | 0.5 g |

### Slurry Formulation # 2 - PAA and Water (1):

The cathode slurry was prepared for a total solid components of 100 wt % - 90 to 95 wt % of the cathode powder, 3 to 5 wt % of Polyacrylicacid powder (Average MW ∼ 450,000 g/mol obtained from Sigma Aldrich) and 2 to 5 wt % of super P conductive carbon black (obtained from Timcal). With reference to the total weight of the solid components, a 10 to 20 wt % of ethanol and 10 to 25 wt % of distilled water were used as solvents.

The cathode powder, polyacrylic acid powder and the carbon black powder were dry-mixed first before adding into the solvents or dispersing liquids. While the water serve as a solvent for the polyacrylic acid, ethanol serves as a dispersant for water-insoluble solids. All the ingredients were mixed in a planetary centrifugal mixer for about 20 minutes with a subsequent de-foaming step for 10 mins to remove any bubbles. After thorough mixing, the cathode slurry was obtained as a viscous liquid or gel.

The specific slurry formulations are given in Table 2.

**Table 2: Slurry Formulations # 2 - PAA and Water (1)**

| Solid component | Ex 1 | Ex 2 | Ex 3 | Ex 4 |
|---|---|---|---|---|
| NMC 811 | 0.9 g | 0.92 g | 0.93 | 0.95 g |
| PAA powder | 0.05 g | 0.04 g | 0.04 g | 0.03 g |
| Carbon black | 0.05 g | 0.04 g | 0.03 g | 0.02 g |

| **Solvents** | | | | |
|---|---|---|---|---|
| Ethanol | 0.2 g | 0.2 g | 0.1 g | 0.1 g |
| Water | 0.15 g | 0.1 g | 0.2 g | 0.25 g |

### Slurry Formulation # 3 - PAA and Water (2):

The cathode slurry was prepared for a total solid components of 100 wt % - 90 to 95 wt % of the cathode powder, 3 to 5 wt % dry polyacrylic acid equivalent of an aqueous solution of polyacrylicacid gel that contains 25 wt % (this wt % does not correspond to the total solid components of the slurry) of solid polyacrylic acid (Average MW ∼ 240,000 g/mol obtained from Alfa Aesar) and 2 to 5 wt % of super P conductive carbon black (obtained from Timcal). With reference to the total weight of the solid components, a 10 to 20 wt % of ethanol and 10 to 25 wt % of distilled water were used as solvents.

The cathode powder, polyacrylic acid gel and the carbon black powder were mixed first in a shear mixer for 2 minutes to get a gel-like mixer. The solvents ethanol and water were added to the pre-formed gel-like mixer and then all the ingredients were mixed a planetary centrifugal mixer for about 20 minutes with a subsequent de-foaming step for 10 mins to remove any bubbles. While the water serve as a solvent for the polyacrylic acid, ethanol serves as a dispersant for water-insoluble solids. After thorough mixing, the cathode slurry was obtained as a viscous liquid or gel.

The specific slurry formulations are given in Table 3.

**Table 3: Slurry Formulations # 3 - PAA and Water (2)**

| Solid component | Ex 5 | Ex 6 | Ex 7 | Ex 8 |
|---|---|---|---|---|
| NMC 811 | 0.9 g | 0.92 g | 0.93 | 0.95 g |
| 25 wt % Aqueous PAA solution or gel | 0.2 g | 0.16 g | 0.16 g | 0.12 g |
| Equivalent PAA solid content | 0.05 g | 0.04 g | 0.04 g | 0.03 g |
| Carbon black | 0.05 g | 0.04 g | 0.03 g | 0.02 g |

| **Solvents** | | | | |
|---|---|---|---|---|
| Ethanol | 0.2 g | 0.2 g | 0.1 g | 0.1 g |
| Water | 0.25 g | 0.2 g | 0.2 g | 0.15 g |

### Slurry coating:

The as-prepared slurry was coated on an aluminum foil of thickness 1 mm using a doctor blade. The wet-thickness of the slurry was between 100 microns to 300 microns. The wet coating of the cathode was dried in an oven at 120°C under vacuum for 12 hours to remove the solvents. The dry thickness of the cathode coating was between 60 to 100 µm.

### Electrode preparation:

The dried electrode was calendared enough to get a thickness between 40 to 80 microns. Then the electrode was cut into circular disks of 16 mm diameter. The punched electrode disks were dried again at 120°C under vacuum for 12 hours and cooled to room temperature to remove any residual or adsorbed solvent. The pre-dried electrode disks were weighed before transferred into the glovebox.

### Cell assembly:

Coin-type cells were made with NMC 811 cathodes described above with graphite as anode. The cells were assembled in an argon-filled glovebox. The cell assembly consists of stacking a cathode and a polypropylene separator (from Celgard). Once the initial stacking of cathode and separator were done, they were placed in a metal can or cup. After that, electrolyte comprised of 1 M LiPF₆ in ethyl carbonate and ethyl methyl carbonate (LP50 obtained from BASF) was filled in the separator. Then, an anode made up of graphite was placed on top of the separator. Finally, the cup with the whole stacking was closed with a metal lid and this step completes the cell assembly.

### Cell cycling:

The lithium-ion coin cells were tested in a multi-channel VMP3 potentiostat from Biologic Science Instruments. The cells were cycled galvanostatically between 3V to 4.2 V vs. Li⁺/Li with a current density between to 10 to 50 mA/g.

### Cathode recovery and recycling:

The first step of the cathode recycling was to disassemble the cell carefully in the argon-filled glovebox. The cathode disk (with the aluminum current collector) was separated from the cell stacking and it was washed in dimethyl carbonate (DMC) to remove electrolyte salt.

Then the washed cathode was again washed in water to remove LPA binder. After that, the electrode materials were peeled off and then the material was centrifuged in water to separate the carbon black. Thus the cathode particles were eliminated from other electrode ingredients.

The recovered cathode particles were technically a slightly Li deficient NMC cathode of the example formula Li₁₋ₓNi_{0.8}Mn_{0.1}Co_{0.1}O₂. To form stoichiometrically correct material, the Li deficient cathode material must be lithiated (i.e addition of lithium to the structure). So, the recovered material was mixed with appropriate amount of lithium source such as lithium carbonate or lithium hydroxide and grounded well. After thorough mixing, the mixture was heated at 100°C to remove any residual moisture for 12 hours. The dried mixture is then transferred to a tubular oven for calcination. The mixture was calcined at temperatures between 800°C to 900°C for 10 to 12 hours and cooled down at 2°C/min.

### Figures and Results:

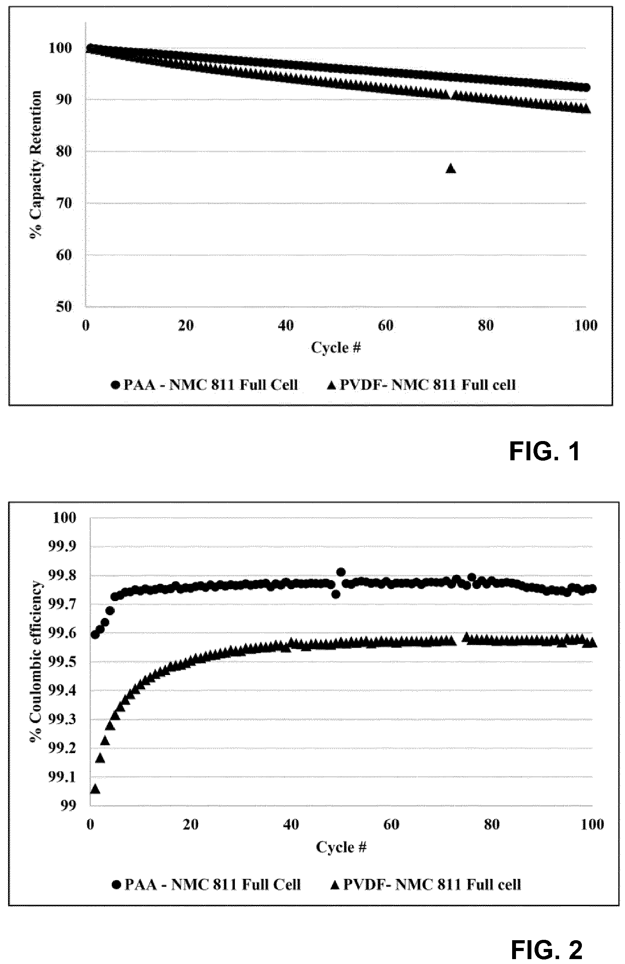

Figure 1 illustrates the capacity retention (normalized capacity) versus the cycle number of lithium-ion cells that were made with NMC 811 cathode and graphite anode, wherein the cathode slurry was made either with PAA in water as described above or PVDF in NMP as shown in the legend. The gravimetric capacity (mAh/g) of the cathode in a full cell was measured experimentally and normalized to 100 % with respect to first cycle to get the normalized capacity.

It can be seen from Figure 1 that the capacity retention of the lithium-ion cells that were made with cathodes according to the invention is deteriorating much less as a function of the cycles.

Figure 2 illustrates the coulombic efficiency (CE) versus the cycle number of lithium-ion cells that were made with NMC 811 cathode and graphite anode, wherein the cathode slurry was made as described above either with PAA in water or PVDF in NMP as shown in the legend. The CE, which is the ratio of output charge to input charge, has been measured from the VMP3 potentiostat experimentally.

It can be seen from Figure 2 that the CE of the lithium-ion cells that were made with cathodes according to the invention is much higher and stabilized at a high value as a function of the cycles.

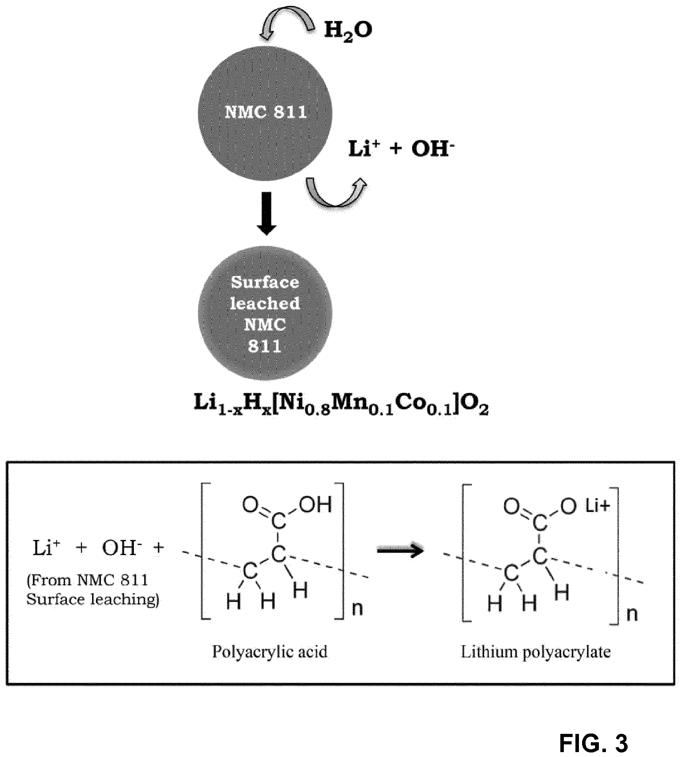

Figure 3 illustrates the schematic of the formation of Lithium polyacrylate (LPA) in a water-based slurry of a Ni-rich cathode such as NMC 811 and its presumed mechanism. As an example, and as demonstrated here, when the NMC 811 cathode particles are contacted with water, the Li ions in the surface domains get leached out or exchanged by H+ ions from the water. As a result, water becomes basic (pH > 7). When PAA was added in the basic water, an acid-base neutralization reaction occurs between PAA and OH- ions in the water resulting in a Li substituted polymer, LPA.

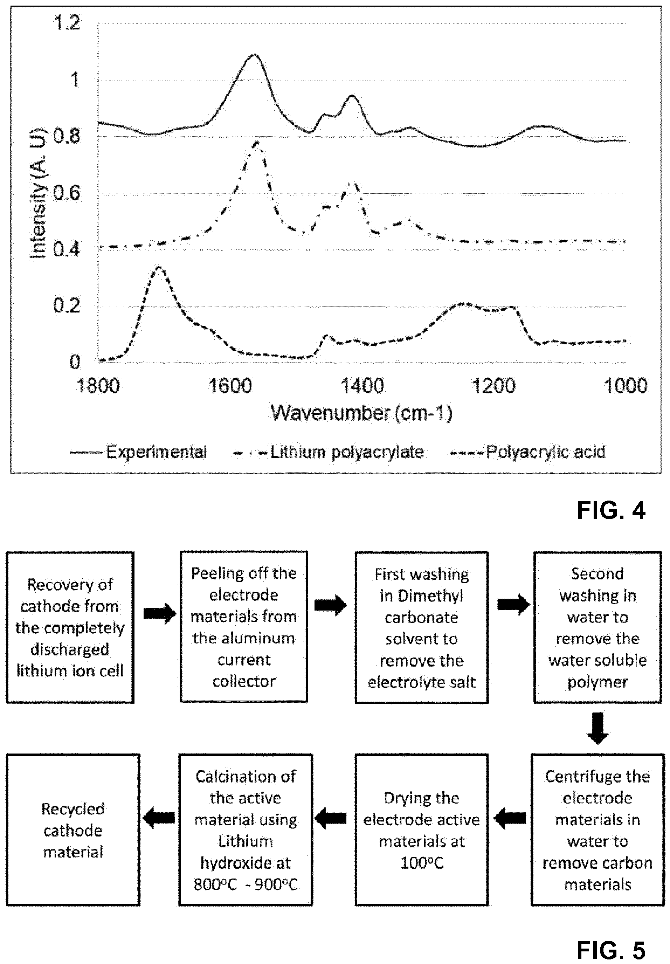

Figure 4 shows the Fourier-transformed infra-red (FTIR) spectrograms of the polymer extracted (Experimental) from the water-based NMC 811 cathode slurry when PAA was used as starting binder, as-synthesized LPA and commercial polyacrylic acid (from Alfa Aesar). The FTIR spectrum of the experimental polymer matches with that of LPA. Clearly polymer extracted (Experimental) from the water-based NMC 811 cathode slurry can be identified as LPA.

Figure 5 the schematic of the cathode material recovery/recycling process steps of Ni-rich cathodes made in a water-based slurry with water-soluble polymer PAA is given, wherein PAA changes to LPA during slurry preparation. Since the slurry disclosed here comprises a water-soluble polymer, the recovery of cathode material after long-term cycling can also be done in water. The recovery process involves the following steps:
(i) After long-term cycling, the lithium-ion cell is opened and cathode (in the form of one or a plurality of films or sheets) is separated by removing the separator and the anode.
(ii) Then the cathode coating including the binder and the conductive carbon is peeled or scratched off mechanically.
(iii) The electrolyte (LP50 from BASF or 1 M LiPF6 in (1:1) EC:EMC solvent mixture) that was in contact with the cathode is washed away. The electrolyte is soluble in DMC and so the separated cathode is immersed and washed in the solvent DMC to remove the electrolyte completely. The electrolyte washing can be done in the glovebox.
(iv) Once taken out from the glovebox, the cathode is washed in water at least 5 times to remove the water-soluble binder, PAA.
(v) After the binder removal, the cathode particles suspension in water is centrifuged a few times to remove the conductive carbon particles. Since the carbon particles are lighter than cathode particles, they segregate in the top layer of the suspension and can thus be removed easily.
(vi) After removing every ingredient of the cathode coating, the remaining cathode particles (active material) is dried at 100°C for at least 12 hours to remove the water.
(vii) After long-term cycling, a cathode is not expected to have the same amount or concentration of Li as that of a pristine cathode particles because at least some amount of Li can have been lost due to several reasons. Hence the inventory Li concentration is determined using ICP-OES. After that required amount of Li, in the form of an equivalent amount of LiOH, is added to the recovered cathode particles and calcined to high temperature between 800°C to 900°C for a timespan during between 10 to 12 hours to get back the NMC 811 cathode particles.

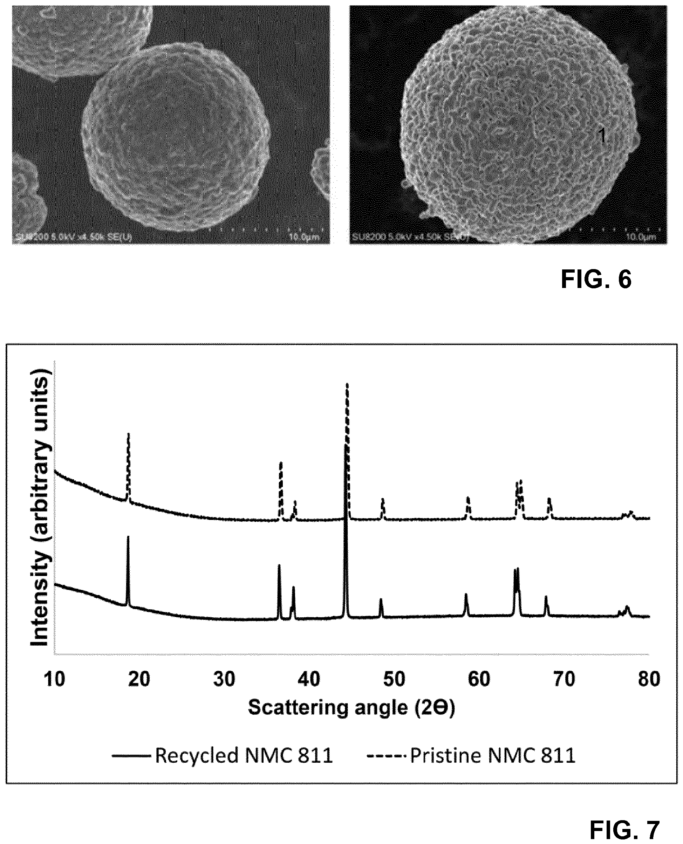

Figure 6 shows scanning electron microscope (SEM) images of pristine NMC 811 (left) cathode particles and recycled (right) NMC 811 cathode particle. The images show the recovered cathode particles appear similar if not essentially identical (both morphology and the size) to the pristine cathode particles.

Figure 7 shows X-Ray diffraction (XRD) patterns of pristine NMC 811 cathode particles and the recycled NMC 811 cathode particles as shown in the legend. The similarity between the two patterns validates that the recovered NMC 811 cathode particles have the same crystal structure (single phase with no impurities) as that of the pristine one.

**LIST OF REFERENCE SIGNS**

| | | | |
|---|---|---|---|
| CE | Coulombic efficiency | MIBK | methyl isobutyl ketone |
| CMC | carboxy-methyl cellulose | NMC 811 | LiNi_{0.8}Mn_{0.1}Co_{0.1}O₂ |
| DMAC | dimethylacetamide | NMP | N-methyl pyrrolidone |
| DMC | dimethyl carbonate | PAA | polyacrylic acid |
| FTIR | Fourier-transformed infra-red | SBR | styrene-butadiene rubber |
| LIB | lithium ion battery | THF | tetrahydrofuran |
| LPA | Lithium polyacrylate | | |
| MEK | methyl ethyl ketone | | |

## Claims

1. Slurry for the coating of a cathode of lithium ion battery, wherein the slurry consists of a solid fraction and of a solvent/dispersant fraction,
wherein the solid fraction consists of:
(a) 90-95% by weight of a lithium metal oxide based particulate electrochemically activatable material;
(b) 2-6% by weight of a water soluble acidic polyacrylate or polymethacrylate binder material;
(c) 2-6% by weight of conductive particulate carbon;
(d) 0-2% by weight further additives different from (a)-(c)
wherein the sum of (a)-(d) make up 100% of the solid fraction and wherein the solvent/dispersant fraction consists of:
(A) 5-25% by weight of an organic alcoholic solvent;
(B) 5-30% by weight of water
(C) 0-5% by weight of solvents/dispersants different from (A) and (B)
wherein the percentages of the solvent/dispersant fraction are relative to the 100% solids fraction.

2. Slurry according to claim 1, wherein the slurry is free from N-methyl pyrrolidone in the solvent/dispersant fraction
and/or wherein the slurry is free from fluorinated additives, solvents/dispersants and/or binders,
in particular wherein the slurry is free from thermoplastic halogenated polymer, in particular free from thermoplastic fluoropolymers, in particular free from at least one of or all of Polytetrafluorethylene (PTFE), Polyvinylidenefluoride (PVDF), Perfluoro alkoxyalkane copolymers (PFA), Tetrafluorethylene-Hexafluorpropylene (FEP), Tetrafluorethylene-Perfluor-Methylvinylether (MFA).

3. Slurry according to any of the preceding claims, wherein the proportion of (C) is 0% and the solvent/dispersant fraction exclusively consists of (A) and (B).

4. Slurry according to any of the preceding claims, wherein the organic alcoholic solvent/dispersant of (A) is a mono-alcohol, preferably selected from the group of methanol, ethanol, propanol, butanol, or a mixture thereof.

5. Slurry according to any of the preceding claims, wherein the organic alcoholic solvent/dispersant of (A) is exclusively selected as ethanol.

6. Slurry according to any of the preceding claims, wherein the proportion of (A) is in the range of 10-20% by weight, and/or the proportion of (B) is in the range of 10-25% by weight, wherein in each case the percentages are given relative to the 100% solids fraction.

7. Slurry according to any of the preceding claims, wherein the proportion of (d) in the solids fraction is 0%, and/or wherein the proportion of component (b) in the solids fraction is in the range of 3-5% by weight, and/or wherein the proportion of (c) in the solids fraction is in the range of 2-5% by weight.

8. Slurry according to any of the preceding claims, wherein component (b) is selected as a polyacrylic acid binder, preferably having a molecular weight in the range of 300,000-600,000 g per mole, preferably in the range of 400,000-500,000 g per mole, and/or wherein component (b) is used in the preparation of the slurry as a dry powder or in the form of a suspension or gel in water.

9. Slurry according to any of the preceding claims, wherein component (a) is a lithium transition metal oxide formed from the 3d or 4d elements, preferably of the LiNiₓMn_{y}Co_{1-x-y}O₂ Type, preferably selected as NMC811.

10. Slurry according to any of the preceding claims, wherein the particles of component (A) have a primary number average particles of the size 1 to 3 microns and secondary particles of number average size 5 to 25 microns.

11. Method for making a slurry according to any of the preceding claims, wherein components (a)-(c), and if present further (d) are mixed to form the solids fraction and subsequently the solvent/dispersant fraction is added under mixing to form the slurry, wherein preferably mixing takes place in a planetary centrifugal mixture.

12. Method for the preparation of a coated cathode for a lithium ion battery, wherein a slurry according to any of claims 1-10, preferably prepared according to the method as defined in claim 11, is applied to a conductive substrate, preferably in the form of a metal foil, most preferably in the form of an aluminium foil, in particular with a thickness in the range of 0.5-2 mm, and subsequently the structure is dried, preferably above room temperature and/or under reduced pressure, wherein preferably a dry coating thickness in the range of 10-200 µm, preferably in the range of 50-120 µm is established.

13. Coated cathode electrode for a lithium ion battery having a coating based on a slurry according to any of the preceding claims 1-10, preferably prepared according to the method as defined in claim 11 or 12, wherein, on a conductive substrate, preferably in the form of a metal foil, most preferably in the form of an aluminium foil, with a thickness in the range of 0.5-2 mm, the dry coating has a thickness in the range of 10-200 µm, preferably in the range of 50-120 µm.

14. Lithium ion battery comprising at least one cathode according to claim 13, wherein preferably the battery only contains one or a plurality of cathodes according to claim 13.

15. Method for recycling a lithium ion battery, preferably having at least one coated cathode according to claim 13, wherein in a first step, if the battery still contains residual charges, it is discharged, preferably to a voltage of at most the initial open circuit voltage, the coating layers are peeled off or dissolved or separated from conductive substrates, these layers are washed, preferably using dimethyl carbonate, to remove residual electrolyte salt, and/or further washed, preferably with water, to remove water-soluble polymeric binder, carbon materials are separated, preferably by centrifugation, the resulting material is dried and subsequently calcinated at an elevated temperature of preferably in the range of 800-1000°C preferably in the presence of lithium hydroxide to obtain recycled electrochemically activatable lithium metal oxide-based particulate material.
